# FASCICULE DE BREVET EUROPEEN

(11) **EP 0 878 454 B1**
(45) Date de publication et mention de la délivrance du brevet: **22.08.2001**
(21) Numéro de dépôt: 98401117.1
(22) Date de dépôt: 11.05.1998
(51) Int. Cl.: C07B 63/02, B01J 39/04

(54) **Procédé de purification de liquides organiques quasi anhydres**
Verfahren zur Reinigung von quasi-wasserfreien organischen Flüssigkeiten
Process for purifying quasi-anhydrous organic liquids

(30) Priorité: 15.05.1997 FR 9705966
(43) Date de publication de la demande: 18.11.1998
(73) Titulaire: Atofina, 92800 Puteaux (FR)
(72) Inventeur: Commarieu, Annie, 92400 Courbevoie (FR); Humblot, Francis, 64300 Lanneplaa (FR)
(74) Mandataire: Leboulenger, Jean

(56) Documents cités:
- WO-A-97/19057
- US-A- 3 505 005
- US-A- 5 571 657
- CHEMICAL ABSTRACTS, vol. 96, no. 6, 1982 Columbus, Ohio, US; abstract no. 36217x, "Purification of methanol-methyl acetate mixture" page 39; colonne 2; XP002053488 & JP 55 160 744 A (NIPPON SYNTHETIC CHEM IND CO) 13 Décembre 1980
- DATABASE WPI Section Ch, Week 8637 2 août 1986 Derwent Publications Ltd., London, GB; Class J01, AN 86-242394 XP002053489 & JP 61 171 507 A (MITSUBISHI CHEM IND)
- P. V. BURAGOHAIN: "Novel resin-based ultrapurification system for reprocessing IPA in the semiconductor industry" IND. ENG. CHEM. RES., vol. 35, 1996, pages 3149-3154, XP002074600
- C. A. FLEMING: "On the extraction of various base metal chlorides from polar organic solvents into cation and anion exchange resins" HYDROMETALLURGY, vol. 4, 1979, pages 159-167, XP002074601
- HARLAND: "ION EXCHANGE, Theory and Practice, 2nd Ed., page 92", 1994, ROYAL SOCIETY OF CHEMISTRY, UK
- KONRAD DORFNER: "Ion Exchangers, page 1369", 11. Mars 1991, WALTER DE GRUYTER, NEW YORK
- : "Ion Exchange Resins, Notices Techniques Amberlite IRN77 et Amberlite IR 1369", 1998, ROHM AND HAAS, PARIS

## Description

La présente invention concerne la purification de liquides quasi anhydres constitués d'un ou plusieurs composés organiques et a plus particulièrement pour objet un procédé pour éliminer les impuretés métalliques présentes dans de tels liquides.

La plupart des liquides organiques commerciaux sont disponibles sur le marché à une pureté déjà très élevée, généralement supérieure à 99 %. Cependant, comme le montrent les données du tableau 1, on trouve encore dans ces liquides des métaux à l'état de traces qui nécessitent une purification supplémentaire pour permettre leur utilisation dans des industries telles que l'électronique ou la pharmacie. En général, des liquides organiques contenant moins de 10 ppb de chaque contaminant métallique, alcalin et alcalino-terreux, seraient nécessaires pour la plupart des utilisations dans ces deux domaines techniques (1 ppb = 1 partie en poids par milliard, soit 1 µg par kg).

**TABLEAU 1**

| Composé | | 1-méthyl-2-pyrrolidone | alcool isopropylique | N,N-diméthylacétamide | mono éthanolamine | alcool benzylique |
|---|---|---|---|---|---|---|
| Fournisseur | | S. G. S. | S.D.S. | Aldrich | Hüls | Elf Atochem |
| Qualité | | ultra pur | purex pour analyse | H.P.L.C. | ultra pur | grade photographique |
| Pureté (%) | | 99,95 | 99,7 | 99,9 | 99,90 | 99,90 |
| Eau (%) | | 0,02 | 0,1 | < 0,03 | 0,06 | < 0,1 |

| Métal | Limite de détection (ppb) | Teneur en métal (ppb) | | | | |
|---|---|---|---|---|---|---|
| Na | 2 | 30 | 30 | 150 | 20 | 240 |
| Fe | 1 | 15 | 6 | 85 | 5 | 5 |

Il apparaît donc souhaitable de disposer d'un procédé de purification de liquides commerciaux contenant un ou plusieurs composés organiques ayant déjà une bonne pureté, mais néanmoins insuffisante pour certaines applications, ce procédé visant notamment à réduire leur teneur en traces métalliques.

Les résines échangeuses d'ions sont très couramment utilisées de nos jours pour déioniser l'eau. En revanche, leur emploi en milieu organique apparaît nettement moins répandu et étudié. Cette absence de développement trouve ses origines dans les propriétés particulières de l'eau qui ionise les sels et sépare totalement les anions des cations. Par contre, selon la constante diélectrique du milieu organique, les ions formés par ionisation se trouvent plus ou moins dissociés et plus ou moins libres de s'échanger avec les groupements fonctionnels de la résine.

On trouve néanmoins certains travaux de recherches (C. A. Fleming et A.J. Monhemus, Hydrometallurgy, 4, pp159-167, 1979) dont l'objectif est d'améliorer par un effet solvant la sélectivité d'échange de quelques métaux avec des résines cationiques, le but final étant de déterminer les conditions qui permettent la séparation des métaux en chromatographie ionique préparative. Ces études décrivent des isothermes d'échange, c'est-à-dire les lois qui régissent l'équilibre entre l'ion métallique en solution et l'ion métallique fixé sur la résine. Les conditions usuelles de tels travaux restent par conséquent très éloignées d'une méthode de déionisation de milieu organique.

Le brevet US 4 795 565 décrit la purification sur résine échangeuse d'ions d'une solution aqueuse d'éthanolamine. L'objectif de ce brevet est l'élimination de certains sels produits pendant l'extraction par l'éthanolamine du dioxyde de carbone et de l'hydrogène sulfuré contenu dans les gaz de raffinerie. La solution usée d'éthanolamine contenant entre 80 et 50 % d'eau en poids est passée successivement sur un lit fixe de résine anionique forte, puis sur un lit fixe de résine cationique forte. Le brevet US 5 162 084 concerne le même type d'application mais améliore l'efficacité de la purification en utilisant une association de deux résines anioniques et en contrôlant judicieusement le fonctionnement de l'unité à l'aide de capteurs conductimétriques. Ces brevets ne décrivent pas la purification d'éthanolamine à basse teneur en eau sur des résines échangeuses d'ions.

Le brevet GB 2 088 850 décrit la purification de la 1-méthyl-2-pyrrolidone (NMP) par passage sur un résine anionique fixant les ions chlorures et carboxylates. Ce traitement s'insère dans un procédé d'extraction sélective par la NMP des hydrocarbures aromatiques contenus dans une mélange de paraffines. Aucune purification avec des résines cationiques n'est décrite dans ce brevet. Par ailleurs, 10 % d'eau en poids sont avantageusement ajoutés à la NMP pour améliorer la sélectivité de l'extraction.

Le brevet RU 2 032 655 concerne la déionisation d'alcools aliphatiques ou de diols dans le but de réduire leur conductibilité électrique. Pour cela, les auteurs utilisent un lit fixe de résine anionique et de résine cationique en égales proportions, ces résines étant préalablement saturées en eau. Dans une publication ultérieure (Vysokochist. Veshchestva, 2, pp 71-75, 1992), A.G. Myakon'kii et coll. ont indiqué qu'une teneur minimale en eau de 2,5 % dans le milieu est nécessaire pour obtenir une déionisation à l'aide du couple de résines sèches.

Dans un article intitulé "Novel resin-based ultrapurification system for reprocessing IPA in the semiconductor industry" (Ind. Eng. Chem. Res. 1996, 35, 3149-3154), P.V. Buragohain et al. préconisent l'utilisation de résines échangeuses de cations (Amberlite® IR 120, Dowex® M31 et Ionac® CFP 110) pour purifier l'alcool isopropylique (IPA). Dans ces résines cationiques à base d'un copolymère polystyrène-divinylbenzène, le taux de divinylbenzène dans le copolymère n'excède pas 20%. Il en est de même des résines Dowex 50, IRN 77 et IR 118 H utilisées dans les brevets US 3 505 005 et 5 571 657 pour diminuer la teneur en cations métalliques de solutions organiques à base d'hydrocarbures chlorés (US 3 505 005) ou de lactate d'éthyle (US 5 571 657).

L'emploi d'une résine échangeuse d'ions de type sulfonique ayant ses groupes actifs sous forme acide SO₃H pour la purification du diméthylsulfoxyde (DMSO) fait l'objet de la demande de brevet WO 97/19057 publiée le 29 mai 1997.

Il a maintenant été trouvé que l'utilisation d'une résine cationique de type sulfonique à base d'un copolymère polystyrène-divinylbenzène ayant un taux élevé de divinylbenzène permet, dans un liquide organique quasi anhydre, de retenir et d'échanger tout cation Mⁿ⁺ (n valant de 1 à 4) par n protons H⁺ ou par n ions NH₄⁺ d'une telle résine sous forme protonique ou ammonium.

La présente invention a donc pour objet un procédé de purification d'un liquide organique quasi anhydre, autre que le DMSO seul, pour en diminuer la teneur en cations métalliques, alcalins et alcalino-terreux, caractérisé en ce qu'il consiste essentiellement à mettre ce liquide organique en contact avec une ou plusieurs résines échangeuses de cations, puis à séparer de la (ou des) résine(s) le liquide organique purifié à de très faibles teneurs en cations métalliques, alcalins alcalino-terreux, ladite résine ou l'une au moins desdites résines étant une résine sulfonique sous forme -SO₃H ou -SO₃NH₄ à base d'un copolymère polystyrène-divinylbenzène dont le taux de divinylbenzène représente de 50 à 60% en poids du copolymère, compte non tenu des groupes sulfoniques.

Par liquide organique quasi anhydre, on entend ici un liquide organique ayant une teneur en eau inférieure ou égale à 1 % en poids, de préférence inférieure ou égale à 0,15 % en poids.

Le procédé selon l'invention peut être appliqué pour purifier tout composé organique liquide présentant une constante diélectrique ε allant de 5 à 50 et un pKa supérieur à 2. Comme exemples non limitatifs de tels composés, on peut citer plus particulièrement la 1-méthyl-2-pyrrolidone (NMP), l'alcool isopropylique (IPA), l'alcool benzylique (ABY), le diméthylacétamide (DMAC), la monoéthanolamine (MEA), l'acétate d'éthyle, l'acétate de butyle, le lactate d'éthyle, le lactate de butyle, le tétrahydrothiophène-1,1-dioxyde (Sulfolane), le glycérol, l'acide acétique, l'acétone et le propylèneglycol monométhyléther acétate (PGMEA). Le procédé convient également pour la purification de mélanges de ces composés entre eux ou avec le DMSO en des proportions très variables. Comme exemples non limitatifs de tels mélanges, on peut mentionner plus particulièrement les mélanges DMSO/MEA, NMP/MEA, DMSO/ABY et DMSO/ABY/MEA.

Les résines cationiques, utiles pour la mise en oeuvre du procédé selon l'invention, sont des produits bien connus et commercialement disponibles, notamment sous les dénominations Amberlyst® et XN 1010 (commercialisées par la Société Rohm & Haas), Hypersol Macronet® (commercialisées par la Société Purolite) et Relite® (commercialisées par la Société Mitsubishi).

L'une au moins des résines utilisées selon l'invention est une résine sulfonique à base d'un copolymère polystyrène-divinylbenzène dont le taux de divinylbenzène représente de 50 à 60 % en poids et le polystyrène de 50 à 40 % en poids par rapport au poids total du copolymère, sans tenir compte des groupes sulfoniques. Ce taux de divinylbenzène assure une bonne activité cinétique de l'échange des cations Mⁿ⁺ par les protons n.H⁺ou ou les cations n.NH₄⁺.

Lorsque l'on utilise plusieurs résines, l'une au moins de ces résines est telle que définie ci-dessus, l'autre (ou les autres) pouvant être de type chélatant. Le liquide organique à purifier peut être mis en contact avec un mélange des différentes résines ou successivement avec chacune des différentes résines.

La mise en contact du liquide organique à purifier avec la ou les résines (de préférence sous la forme H⁺) a lieu à une température allant du point de fusion du liquide à purifier jusquà 120°C (température limite de stabilité thermique des résines). Cette température est avantageusement comprise entre 19 et 80°C, de préférence entre 20 et 50°C.

L'opération peut être réalisée en discontinu (batch) ou en continu, dans les conditions et appareillages bien connus de l'homme du métier. La séparation du liquide purifié d'avec la ou les résines peut se faire par tout moyen connu approprié, notamment par filtration, percolation ou centrifugation.

L'invention sera mieux comprise à l'aide de la partie expérimentale suivante décrivant des exemples de réalisation de la présente invention.

### Partie expérimentale

### I. Méthodologie

Les traces métalliques sont sous forme Mⁿ⁺. Par contact du liquide à purifier avec la ou les résines échangeuses de cations, elles-mêmes sous forme H⁺ ou NH₄⁺, on substitue les ions Mⁿ⁺ en solution par des protons H⁺ ou par des ions NH₄⁺.

Dans un premier temps, des tests en batch ont été réalisés pour traiter différents composés organiques, purs ou en mélange.

Dans un deuxième temps, certains milieux ont été purifiés en mode continu, par passage du liquide sur un lit fixe de résine échangeuse d'ions. Cette technique est en effet plus satisfaisante et représentative d'une production réelle de liquide purifié.

### II. Méthode d'analyse

La méthode d'analyse de traces métalliques dans les milieux organiques est l'I.C.P. (spectrométrie d'émission atomique - torche à plasma) : l'échantillon est introduit dans une torche à plasma où les différents éléments sont excités et émettent des photons dont l'énergie est caractéristique de l'élément puisqu'elle est définie par la structure électronique de l'élément considéré. On a utilisé en routine un appareil Perkin Elmer (modèle Optima 3000 DV).

Cette technique permet d'analyser simultanément la teneur de plusieurs métaux. Dans un souci de clarté des résultats, on a choisi de n'indiquer que la teneur en fer et en sodium, éléments traceurs représentatifs de l'ensemble des impuretés métalliques présentes. Le sodium traduit une pollution atmosphérique et accidentelle (poussières) et le fer est caractéristique d'une pollution issue du procédé de fabrication ou du conditionnement (contact du liquide avec l'acier).

Les limites de détections de cette technique d'analyse dépendent du métal considéré. Pour le sodium, la limite de détection est de 2 ppb et pour le fer de 1 ppb.

### III. Essais en batch

### III. 1. Préparation expérimentale

A 100 g de liquide organique on a ajouté entre 100 et 1000 ppb de sodium et de fer, puis cette solution a été mise en contact avec une quantité connue de résine (entre 2 et 10 g) sous forme H⁺. Des échantillons de liquide ont été prélevés au cours du temps afin de suivre l'évolution des concentrations en fer et en sodium.

La résine utilisée (Hypersol Macronet® MN 500 de la Société Purolite) est une résine sulfonique à structure styrène/divinylbenzène ayant un taux de divinylbenzène de 60%; elle est fournie sous forme H⁺. Elle a été préalablement séchée par mise en suspension dans le méthanol et évaporation sous vide à l'évaporateur rotatif (90°C, 2000 Pa) jusqu'à observation d'un poids constant.

### 111.2. Réduction de la teneur en cation (autre que H⁺) de la NMP: Exemple 1

L'efficacité de la résine MN 500 a été testée dans la purification de la NMP, en employant 10 g de résine pour 100 g de NMP. Le tableau 2 montre l'évolution des teneurs en fer et en sodium au cours du temps.

**TABLEAU 2**

| **(Exemple 1)** | | | | |
|---|---|---|---|---|
| Temps (heures) | 0 | 4 | 8 | 24 |
| [Na] (ppb) | 110 | <2 | <2 | <2 |
| [Fe] (ppb) | 100 | 3 | <1 | <1 |

### 111.3. Réduction de la teneur en cation (autre que H⁺) de différents milieux organiques purs ou en mélange : exemples 2 à 12.

L'efficacité de l'échange ionique entre une résine et un milieu organique dépend de la nature de la résine mais également du milieu considéré. Dans les exemples 2 à 9, l'activité de la résine sulfonique MN 500 de la société Purolite a été testée vis-à-vis des cations contenus dans divers milieux organiques purs ou mélanges de composés organiques. Le tableau 3 (exemple 2) indique l'évolution en fonction du temps de la concentration en fer et en sodium dans l'alcool benzylique traité avec 2 % en poids de résine MN 500.

**TABLEAU 3**

| **(Exemple 2)** | | | | | | | | | | |
|---|---|---|---|---|---|---|---|---|---|---|
| Temps (min.) | 0 | 5 | 10 | 20 | 25 | 30 | 45 | 60 | 90 | 120 |
| [Na] (ppb) | 450 | 200 | 80 | 40 | 20 | 18 | 10 | 10 | 8 | 8 |
| [Fe] (ppb) | 530 | 440 | 340 | 280 | 150 | 130 | 110 | 60 | 12 | 10 |

Le tableau 4 (exemples 3 à 7) rassemble les résultats concernant les cinétiques d'échange du fer et du sodium dans cinq autres composés organiques : l'alcool isopropylique (IPA), le N,N-diméthylacétamide (DMAC), la monoéthanolamine (MEA), le propylèneglycol monométhyléther acétate (PGMEA) et l'acide acétique (AcOH).

**TABLEAU 4**

| **Exemples 3 à 7** | | | | | | | | | | |
|---|---|---|---|---|---|---|---|---|---|---|
| Exemple n° | 3 | | 4 | | 5 | | 6 | | 7 | |
| Liquide organique | IPA | | DMAC | | MEA | | PGMEA | | AcOH | |
| Quantité de résine (% p/p) | 5 | | 5 | | 5 | | 10 | | 10 | |

| Temps (heures) | [Na] (ppb) | [Fe] (ppb) | [Na] (ppb) | [Fe] (ppb) | [Na] (ppb) | [Fe] (ppb) | [Na] (ppb) | [Fe] (ppb) | [Na] (ppb) | [Fe] (ppb) |
|---|---|---|---|---|---|---|---|---|---|---|
| 0 | 250 | 240 | 530 | 570 | 100 | 100 | 30 | 40 | 420 | 100 |
| 1 | 5 | 36 | 5 | 70 | 20 | 3 | 22 | 20 | 30 | 6 |
| 2 | 3 | 6 | 2 | 30 | 12 | 2 | 20 | 12 | 19 | 3 |
| 4 | 2 | 5 | <2 | 15 | 10 | <2 | 19 | 9 | 15 | 2 |
| 6 | 3 | 6 | 2 | 13 | 8 | 2 | - | - | - | - |
| 8 | 2 | 7 | <2 | 10 | 3 | 2 | 10 | 7 | 10 | 3 |
| 24 | - | - | - | - | - | - | 9 | 6 | 7 | 2 |

Le tableau 5 regroupe les cinétiques d'échange du sodium et du fer dans des mélanges binaires de composés organiques. La même résine que précédemment (MN 500) a été employée.

**TABLEAU 5**

| **Exemples 8 à 12** | | | | | | | | | | |
|---|---|---|---|---|---|---|---|---|---|---|
| Exemple n° | 8 | | 9 | | 10 | | 11 | | 12 | |
| Mélange | DMSO/MEA 70 / 30 (p/p) | | DMSO/MEA 30 / 70 (p/p) | | NMP / MEA 70 / 30 (p/p) | | NMP / MEA 30 / 70 (p/p) | | DMSO/ ABY 50 / 50 (p/p) | |
| Quantité de résine (% p/p) | 5 | | 5 | | 5 | | 5 | | 5 | |

| Temps (heures) | [Na] (ppb) | [Fe] (ppb) | [Na] (ppb) | [Fe] (ppb) | [Na] (ppb) | [Fe] (ppb) | [Na] (ppb) | [Fe] (ppb) | [Na] (ppb) | [Fe] (ppb) |
|---|---|---|---|---|---|---|---|---|---|---|
| 0 | 160 | 270 | 150 | 210 | 155 | 170 | 125 | 170 | 500 | 600 |
| 8 | <2 | 9 | 10 | 13 | 2 | 6 | <2 | 9 | <2 | 7 |
| 24 | 2 | 5 | 8 | 9 | 2 | 3 | <2 | 4 | <2 | 9 |

### IV. Essais en continu

### IV.1. Préparation expérimentale

A partir des résultats en batch, plusieurs tests en continu ont été entrepris selon les règles communément suivies par l'homme de l'art quant aux rapports diamètre de colonne/taille de grain, hauteur de colonne/diamètre de colonne et à la vitesse linéaire pour ne pas avoir de limitation diffusionnelle.

La résine préalablement séchée comme indiqué précédemment est mise en suspension dans 90 ml de liquide dans un bécher et légèrement agitée (pour éliminer les bulles d'air). Cette suspension est introduite dans une colonne en Téflon, en position verticale et dont la partie inférieure est équipée d'un fritté en polyéthylène de porosité 70µm. Le bécher est rincé avec 10 ml de liquide. Sous le fritté, la colonne est équipée d'un robinet en Téflon. Ce robinet est fermé au cours de l'opération de remplissage. Une fois la résine déposée et tassée dans la colonne, on ouvre le robinet et alimente la colonne en continu en milieu à purifier grâce à une pompe équipée d'une tête en Téflon. Des prélèvements sont effectués à intervalles réguliers. Tous les tubes et raccords sont en Téflon. Les flacons sont en polyéthylène haute densité.

### IV.2. Réduction de la teneur en cation (autre que H⁺) de différents milieux constitués d'un ou de plusieurs produits organiques : exemples 13 à 16

| | |
|---|---|
| Résine MN 500 | |
| Volume de résine | sèche : 35 cm³ (à l'exception de l'exemple 16: 88 cm³) |
| Taille des grains | 0,3 à 1,2 mm |

Les résultats apparaissent dans le tableau 6 suivant. Le volume équivalent qui traduit l'évolution de l'essai est le rapport entre le volume de liquide (en litre) et le volume de résine (en ml).

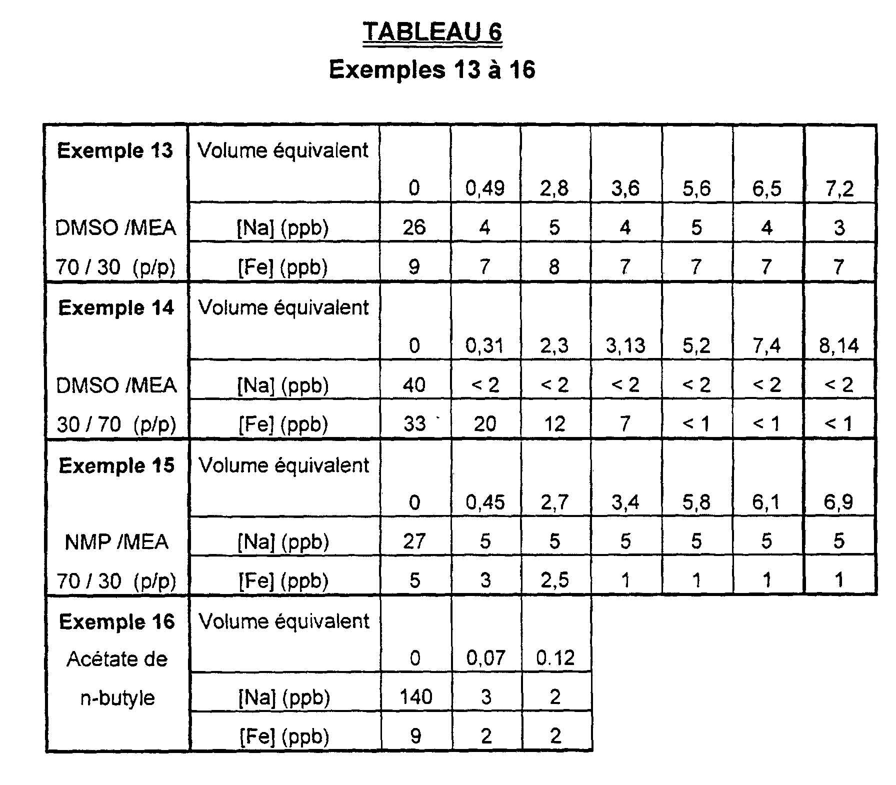

## Revendications

1. Procédé pour diminuer la teneur en cations métalliques, alcalins et alcalino-terreux d'un liquide organique constitué par un composé organique présentant une constante diélectrique ε allant de 5 à 50 et un pKa supérieur à 2, autre que le diméthylsulfoxyde seul, ou par un mélange de tels composés entre eux et/ou avec le diméthylsulfoxyde (DMSO), caractérisé en ce qu'il consiste essentiellement à mettre le liquide organique à purifier, ayant une teneur en eau inférieure ou égale à 1 % en poids, en contact avec une ou plusieurs résines échangeuses de cations sous forme acide ou ammonium, puis à séparer de la (ou des) résine(s) le liquide organique purifié, ladite résine ou l'une au moins desdites résines étant une résine sulfonique à base d'un copolymère polystyrène-divinylbenzène dont le taux de divinylbenzène représente de 50 à 60% en poids du copolymère, compte non tenu des groupes sulfoniques.

2. Procédé selon la revendication 1, caractérisé en ce que la teneur en eau du liquide organique est inférieure ou égale à 0,15 % en poids.

3. Procédé selon la revendication 1 ou 2, caractérisé en ce que le liquide à purifier est choisi parmi la 1-méthyl-2-pyrrolidone (NMP), l'alcool isopropylique, l'alcool benzylique (ABY), le diméthylacétamide, la monoéthanolamine (MEA), l'acétate d'éthyle, l'acétate de butyle, le lactate d'éthyle, le lactate de butyle, le tétrahydrothiophène-1,1-dioxyde, le glycérol, l'acide acétique, l'acétone, le propylèneglycol monométhyléther acétate et les mélanges DMSO/MEA, NMP/MEA, DMSO/ABY et DMSO/ABY/MEA.

4. Procédé selon l'une des revendications 1 à 3, caractérisé en ce que l'on utilise au moins deux résines dont l'une au moins est une résine sulfonique telle que définie dans la revendication 1, l'autre (ou les autres) pouvant être de type chelatant.

5. Procédé selon l'une des revendications 1 à 4, caractérisé en ce que la ou les résines sont sous la forme acide H⁺.

6. Procédé selon l'une des revendications 1 à 5, caractérisé en ce que la mise en contact du liquide à purifier avec la ou les résines échangeuses a lieu à une température allant de 19 à 80°C.

7. Procédé selon la revendication 6, caractérisé en ce que la température est comprise entre 20 et 50°C.

## Patentansprüche

1. Verfahren zur Verringerung des Gehalts an Metall-, Alkali- und Erdalkalikationen einer organischen Flüssigkeit, die aus einer organischen Verbindung mit einer dielektrischen Konstanten ε von 5 bis 50 und einem pKa-Wert größer 2 oder aus einem Gemisch solcher Verbindungen untereinander und/oder mit dem Dimethylsulfoxid (DMSO) besteht, ausgenommen Dimethylsulfoxid allein, dadurch gekennzeichnet, daß es im wesentlichen darin besteht, die zu reinigende organische Flüssigkeit mit einem Wassergehalt kleiner oder gleich 1 Gew.-% mit einem oder mehreren Kationenaustauscherharzen in Säure- oder Ammoniumform zusammenzubringen, dann die gereinigte organische Flüssigkeit von dem (oder den) Harz(en) zu trennen, wobei das genannte Harz oder zumindest eines der genannten Harze ein Sulfonharz auf Grundlage eines Polystyrol-Divinylbenzol-Copolymeren ist, dessen Divinylbenzolanteil 50 bis 60 Gew.-% des Copolymeren, ohne Berücksichtigung der Sulfongruppen, beträgt.

2. Verfahren nach Anspruch 1, dadurch gekennzeichnet, daß der Wassergehalt der organischen Flüssigkeit kleiner oder gleich 0,15 Gew.-% ist.

3. Verfahren nach Anspruch 1 oder 2, dadurch gekennzeichnet, daß die zu reinigende Flüssigkeit aus 1-Methyl-2-pyrrolidon (NMP), Isopropylalkohol, Benzylalkohol (ABY), Dimethylacetamid, Monoethanolamin (MEA), Ethyl-, Butylacetat, Ethyl-, Butyllactat, Tetrahydrothiophen-1,1-dioxid, Glycerin, Essigsäure, Aceton, Propylenglycol-monomethylether-acetat und den Gemischen DMSO/MEA, NMP/MEA, DMSO/ABY und DMSO/ABY/MEA gewählt ist.

4. Verfahren nach einem der Ansprüche 1 bis 3, dadurch gekennzeichnet, daß man mindestens zwei Harze verwendet, von denen mindestens eines ein Sulfonharz nach Anspruch 1 ist und das andere (oder die anderen) vom Chelattyp sein kann.

5. Verfahren nach einem der Ansprüche 1 bis 4, dadurch gekennzeichnet, daß das Harz oder die Harze in der Säureform von H⁺ vorliegen.

6. Verfahren nach einem der Ansprüche 1 bis 5, dadurch gekennzeichnet, daß das Zusammenbringen der zu reinigenden Flüssigkeit mit dem oder den Austauscherharzen bei einer Temperatur von 19 bis 80 °C stattfindet.

7. Verfahren nach Anspruch 6, dadurch gekennzeichnet, daß die Temperatur zwischen 20 und 50 °C liegt.

## Claims

1. Process for reducing the content of alkali and alkaline-earth metal and metal cations in an organic liquid consisting of an organic compound having a dielectric constant ε ranging from 5 to 50 and a pKa higher than 2, other than dimethyl sulphoxide alone, or of a mixture of such compounds with each other and/or with dimethyl sulphoxide (DMSO), characterized in that it consists essentially in placing the organic liquid to be purified, having a water content of less than or equal to 1 % by weight, in contact with one or more cation-exchange resins in acid or ammonium form, and then in separating the purified organic liquid from the resin(s), the said resin or at least one of said resins being a sulphonic resin based on a polystyrene-divinylbenzene copolymer whose divinylbenzene content represents from 50 to 60% by weight of the copolymer, not including the sulphonic groups.

2. Process according to Claim 1, characterized in that the water content of the organic liquid is lower than or equal to 0.15 % by weight.

3. Process according to Claim 1 or 2, characterized in that the liquid to be purified is chosen from 1-methyl-2-pyrrolidone (NMP), isopropyl alcohol, benzyl alcohol (BYA), dimethylacetamide, monoethanolamine (MEA), ethyl acetate, butyl acetate, ethyl lactate, butyl lactate, tetrahydrothiophene-1,1-dioxide, glycerol, acetic acid, acetone, propylene glycol monomethyl ether acetate and DMSO/MEA, NMP/MEA, DMSO/BYA and DMSO/BYA/MEA mixtures.

4. Process according to one of Claims 1 to 3, characterized in that at least two resins are employed, at least one of which is a sulphonic resin as defined in claim 1, it being possible for the other(s) to be of chelating type.

5. Process according to one of Claims 1 to 4, characterized in that the resin or resins are in the H⁺ acid form.

6. Process according to one of Claims 1 to 5, characterized in that the contact of the liquid to be purified with the exchange resin(s) takes place at a temperature ranging from 19 to 80°C.

7. Process according to Claim 6, characterized in that the temperature is between 20 and 50°C.
